(19) Europäisches Patentamt
European Patent Office
Office européen des brevets

(11) EP 4 118 139 B1

(12) FASCICULE DE BREVET EUROPEEN

(45) Date de publication et mention de la délivrance du brevet:
**01.05.2024 Bulletin 2024/18**

(21) Numéro de dépôt: **21716797.2**

(22) Date de dépôt: **09.03.2021**

(51) Classification Internationale des Brevets (IPC):
***C08K 3/04*** (2006.01) ***C08K 5/40*** (2006.01)
***C08K 5/47*** (2006.01) ***C08L 23/08*** (2006.01)

(52) Classification Coopérative des Brevets (CPC):
(C-Sets disponibles)
**C08K 3/04; C08K 5/31; C08K 5/40; C08K 5/44; C08K 5/47** (Cont.)

(86) Numéro de dépôt international:
**PCT/FR2021/050395**

(87) Numéro de publication internationale:
**WO 2021/181040 (16.09.2021 Gazette 2021/37)**

# (54) PROCÉDÉ DE FABRICATION D'UNE COMPOSITION DE CAOUTCHOUC

VERFAHREN ZUM PRODUZIEREN EINER KAUTSCHUKZUSAMMENSETZUNG

METHOD FOR PRODUCING A RUBBER COMPOSITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.03.2020 FR 2002364**

(43) Date de publication de la demande:
**18.01.2023 Bulletin 2023/03**

(73) Titulaire: **COMPAGNIE GENERALE DES ETABLISSEMENTS MICHELIN**
**63000 Clermont-Ferrand (FR)**

(72) Inventeurs:
- **FLEURY, Etienne**
  **63040 Clermont-Ferrand Cedex 9 (FR)**
- **CLADIERE, Julien**
  **63040 Clermont-Ferrand Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**EP-A1- 1 753 106** **EP-A2- 1 753 107**
**WO-A1-2019/110924**

- **DATABASE WPI Week 201980 Thomson Scientific, London, GB; AN 2019-79555M XP002801109, & CN 110 218 274 A (CHANGCHUN APPLIED CHEM INST CHINESE ACAD) 10 septembre 2019 (2019-09-10)**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



(Cont. page suivante)

(52) Classification Coopérative des Brevets (CPC):
(Cont.)

C-Sets
**C08K 3/04, C08L 23/083;**
**C08K 5/31, C08L 23/083;**
**C08K 5/40, C08L 23/083;**
**C08K 5/44, C08L 23/083;**
**C08K 5/47, C08L 23/083**

## Description

Le domaine de la présente invention est celui des procédés de fabrication des compositions de caoutchouc renforcées par du noir de carbone et contenant des copolymères de diènes conjugués riches en unités éthylène.

Il est connu de réticuler les élastomères diéniques dans une composition de caoutchouc pour conférer à la composition de caoutchouc les propriétés d'élasticité, de rigidité et de renforcement souhaitées selon l'application envisagée. Il est donc habituel depuis de très nombreuses années de vulcaniser, c'est-à-dire réticuler sous l'action du soufre, les élastomères diéniques dans une composition de caoutchouc, en particulier destinée à être utilisée dans un pneumatique. La réaction de vulcanisation procède d'une réaction entre les unités diéniques de l'élastomère et un système de réticulation qui comprend des réactifs à base de soufre.

Généralement, les systèmes de vulcanisation comprennent en plus du soufre au moins un accélérateur primaire et un accélérateur secondaire. La combinaison de l'accélérateur primaire et de l'accélérateur secondaire permet d'accélérer la réaction de vulcanisation des compositions de caoutchouc diénique, donc de diminuer le temps de vulcanisation, ce qui est intéressant sur le plan de la productivité industrielle. Mais cette accélération de la vitesse de vulcanisation ne doit pas s'accompagner d'une vulcanisation prématurée (ou grillage) de la composition. Ce phénomène de vulcanisation prématurée, s'il se produit, est pénalisant dans les étapes de préparation et de mise en forme de la composition de caoutchouc, en particulier le calandrage ou l'extrusion, étapes qui précèdent généralement l'étape de vulcanisation de la composition de caoutchouc diénique. En effet, le grillage peut conduire à de fortes élévations de viscosité des compositions de caoutchouc qui deviennent alors beaucoup plus difficiles à travailler et à mettre en oeuvre industriellement.

Pour éviter une vulcanisation prématurée, le soufre et les accélérateurs primaires et secondaires sont introduits dans la composition de caoutchouc à une température bien inférieure à la température de vulcanisation et leur incorporation par malaxage dans la composition de caoutchouc est aussi réalisée à une température inférieure à celle de la température de vulcanisation. C'est pourquoi, les procédés traditionnels de fabrication des compositions de caoutchouc diéniques comportent deux phases de préparations successives bien connues de l'homme du métier. La première est une étape de malaxage thermomécanique des constituants de la composition de caoutchouc à l'exception du soufre et des accélérateurs. La première étape est conduite à haute température, typiquement jusqu'à une température maximale supérieure à 110°C, de préférence de 130°C à 180°C. Elle est qualifiée de phase de travail ou phase non productive. La deuxième étape, dite phase productive, est conduite à plus basse température, typiquement inférieure à 110°C, par exemple entre 40°C et 100°C, phase de finition au cours de laquelle est incorporé le système de vulcanisation.

Dans la préparation des compositions de caoutchouc pour pneumatique, les élastomères diéniques les plus largement utilisés sont les polybutadiènes, les polyisoprènes, en particulier le caoutchouc naturel, et les copolymères de 1,3-butadiène et de styrène. Le point commun à ces élastomères est la forte proportion molaire d'unités diéniques dans l'élastomère puisqu'ils contiennent généralement plus de 50% en mole d'unités diéniques. D'ailleurs cette forte proportion des unités diéniques peut rendre ces élastomères riches en unités diéniques sensibles à l'oxydation, notamment sous l'action de l'ozone. La Demanderesse a décrit des élastomères qui a contrario sont relativement pauvres en unités diéniques, notamment en vue de réduire leur sensibilité aux phénomènes d'oxydation. Ces élastomères sont par exemple décrits dans le document WO 2007054223. Ce sont des copolymères de diène conjugué et d'éthylène contenant plus de 50% en mole d'unité éthylène. Ces élastomères sont qualifiés d'élastomères diéniques riches en éthylène.

Le remplacement des élastomères riches en unités diéniques dans les compositions de caoutchouc pour pneumatique par des élastomères diéniques riches en unité éthylène peut s'accompagner à la fois d'une diminution d'hystérèse de la composition de caoutchouc et d'une augmentation de sa rigidité, ce qui se traduit par une modification du compromis de performance entre la résistance au roulement et l'usure du pneumatique. On peut par exemple se référer au document WO 2014114607.

La Demanderesse poursuivant ses efforts de réduire encore davantage l'hystérèse des compositions de caoutchouc à base d'élastomères de diène conjugués et riches en unités éthylène a découvert contre toute attente que l'introduction d'un accélérateur secondaire dans la composition de caoutchouc pendant la phase non productive permettait de réduire l'hystérèse de la composition de caoutchouc sans causer de vulcanisation prématurée.

Ainsi, l'invention concerne un procédé de fabrication d'une composition de caoutchouc qui comprend un élastomère diénique fortement saturé, une charge renforçante comprenant un noir de carbone et un système de vulcanisation comprenant du soufre et un accélérateur de vulcanisation,

- l'élastomère diénique fortement saturé étant un copolymère d'éthylène et d'un 1,3-diène contenant des unités éthylène qui représentent au moins 50% en mole des unités monomères du copolymère,
- le taux de l'élastomère diénique fortement saturé dans la composition de caoutchouc étant supérieur à 50 pce,
- l'accélérateur de vulcanisation étant un mélange d'un accélérateur primaire et d'un accélérateur secondaire,

l'accélérateur primaire étant un sulfénamide, l'accélérateur secondaire étant un polysulfure de thiurame ou un mélange d'un polysulfure de thiurame et d'une guanidine,

lequel procédé comprend une étape a) suivie d'une étape b) :

a) le mélangeage de l'élastomère diénique fortement saturé, de la charge renforçante et de l'accélérateur secondaire par malaxage à une température supérieure à 110°C, en l'absence du soufre et de l'accélérateur primaire,
b) l'incorporation du soufre et de l'accélérateur primaire dans la composition de caoutchouc par malaxage à une température inférieure à 110°C.

**Description**

Tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b). L'abréviation "pce" signifie parties en poids pour cent parties d'élastomère (du total des élastomères si plusieurs élastomères sont présents).

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges ...

Dans la présente demande, on entend par « l'ensemble des unités monomères de l'élastomère » ou « la totalité des unités monomères de l'élastomère » tous les motifs de répétitions constitutifs de l'élastomère qui résultent de l'insertion des monomères dans la chaîne élastomère par polymérisation. Sauf indication contraire, les teneurs en une unité monomère ou motif de répétition dans l'élastomère diénique fortement saturé sont données en pourcentage molaire calculé sur la base de l'ensemble des unités monomères de l'élastomère.

Le procédé conforme à l'invention est un procédé de préparation d'une composition de caoutchouc. Il a pour caractéristique essentielle de comprendre deux étapes de malaxage, une à l'étape a) et une à l'étape b). L'étape a) du procédé conforme à l'invention est une étape au cours de laquelle sont mélangés par malaxage, notamment thermomécanique, les constituants de la composition de caoutchouc à l'exception du soufre et de l'accélérateur primaire. Au cours de la l'étape a), l'élastomère, la charge renforçante et l'accélérateur secondaire sont malaxés ensemble, typiquement dans un mélangeur approprié tel qu'un mélangeur interne usuel. La température de malaxage à l'étape a) est supérieure à 110°C, préférentiellement comprise entre 110°C et 190°C, avantageusement supérieure à 130°C et inférieure à 180°C. Les plages de température entre 110°C et 190°C et entre 130°C et 180°C correspondent à des valeurs de températures maximales atteintes par le mélange malaxé dans le mélangeur pendant l'étape a). Typiquement, le malaxage au cours de l'étape a) est poursuivi jusqu'à ce que le mélange malaxé atteigne la température maximale de malaxage avant d'être extrait du mélangeur. La durée totale du malaxage à l'étape a) est de préférence comprise entre 1 et 15 minutes. Le mélange préparé à l'issue de l'étape a) est récupéré, puis refroidi pour pouvoir procéder à l'étape b) qui est réalisée à plus basse température, en l'espèce à une température inférieure à 110°C, préférentiellement comprise entre 40°C et 100°C. L'étape b) est l'étape au cours de laquelle sont incorporés le soufre et l'accélérateur primaire dans le mélange malaxé comprenant l'élastomère, la charge renforçante et l'accélérateur secondaire. L'incorporation du soufre et de l'accélérateur primaire dans la composition de caoutchouc est typiquement réalisée par malaxage dans un mélangeur externe tel qu'un mélangeur à cylindres, généralement pendant une durée comprise entre 2 et 15 minutes. Le malaxage à l'étape b) se fait à une température inférieure à 110°C, préférentiellement comprise entre 40°C et 100°C.

L'élastomère utile aux besoins de l'invention est un élastomère diénique fortement saturé, de préférence statistique, qui comprend des unités éthylène résultant de la polymérisation d'éthylène. De manière connue, l'expression « unité éthylène » fait référence au motif-($CH_2$-$CH_2$)- résultant de l'insertion de l'éthylène dans la chaîne élastomère. L'élastomère diénique fortement saturé est riche en unité éthylène, puisque les unités éthylène représentent au moins 50% en mole de l'ensemble des unités monomères de l'élastomère.

De préférence, l'élastomère diénique fortement saturé comprend au moins 60% molaire d'unité éthylène, particulièrement au moins 65% molaire d'unité éthylène. Autrement dit, les unités éthylène représentent préférentiellement au moins 60% en mole de l'ensemble des unités monomères de l'élastomère diénique fortement saturé, particulièrement au moins 65% en mole de l'ensemble des unités monomères de l'élastomère diénique fortement saturé. Plus particulièrement, les unités éthylène représentent au moins 70% en mole de l'ensemble des unités monomères de l'élastomère diénique fortement saturé. De préférence, les unités éthylène représentent au plus 90% en mole de l'ensemble des unités monomères de l'élastomère diénique fortement saturé. De manière plus préférentielle, les unités éthylène représentent au plus 85% en mole de l'ensemble des unités monomères de l'élastomère diénique fortement saturé. Avantageusement, l'élastomère diénique fortement saturé comprend de 60% à 90% molaire d'unité éthylène, particulièrement de 65% à 90% molaire d'unité éthylène, pourcentage molaire calculé sur la base de l'ensemble des unités monomères de l'élastomère diénique fortement saturé. Plus avantageusement, l'élastomère diénique fortement saturé comprend

de 60% à 85% molaire d'unité éthylène, particulièrement de 65% à 85% molaire d'unité éthylène, pourcentage molaire calculé sur la base de l'ensemble des unités monomères de l'élastomère diénique fortement saturé. Plus particulièrement, l'élastomère diénique fortement saturé comprend de 70% à 85% molaire d'unité éthylène, pourcentage molaire calculé sur la base de l'ensemble des unités monomères de l'élastomère diénique fortement saturé.

L'élastomère diénique fortement saturé étant un copolymère d'éthylène et d'un 1,3-diène comprend aussi des unités 1,3-diène résultant de la polymérisation d'un 1,3-diène. De manière connue, l'expression « unité 1,3-diène » fait référence aux unités résultant de l'insertion du 1,3-diène par une addition 1,4, une addition 1,2 ou une addition 3,4 dans le cas de l'isoprène par exemple. Les unités 1,3-diène sont celles par exemple d'un 1,3-diène ayant 4 à 12 atomes de carbone, tels que le 1,3-butadiène, l'isoprène, le 1,3-pentadiène, un aryl-1,3-butadiène. De préférence, le 1,3-diène est le 1,3-butadiène ou un mélange de 1,3-diènes dont un est le 1,3-butadiène. De manière plus préférentielle, le 1,3-diène est le 1,3-butadiène auquel cas l'élastomère diénique fortement saturé est un copolymère d'éthylène et de 1,3-butadiène, de préférence statistique.

L'élastomère diénique fortement saturé peut être obtenu selon différentes méthodes de synthèses connues de l'homme du métier, notamment en fonction de la microstructure visée de l'élastomère diénique fortement saturé. Généralement, il peut être préparé par copolymérisation au moins d'un 1,3-diène, de préférence le 1,3-butadiène, et d'éthylène et selon des méthodes de synthèse connues, en particulier en présence d'un système catalytique comprenant un complexe métallocène. On peut citer à ce titre les systèmes catalytiques à base de complexes métallocènes, lesquels systèmes catalytiques sont décrits dans les documents EP 1 092 731, WO 2004035639, WO 2007054223 et WO 2007054224 au nom de la Demanderesse. L'élastomère diénique fortement saturé, y compris lorsqu'il est statistique, peut être préparé aussi par un procédé utilisant un système catalytique de type préformé comme ceux décrits dans les documents WO 2017093654 A1, WO 2018020122 A1 et WO 2018020123 A1. Avantageusement, l'élastomère diénique est statistique.

L'élastomère diénique fortement saturé contient de préférence des unités de formule (I) ou des unités de formule (II).

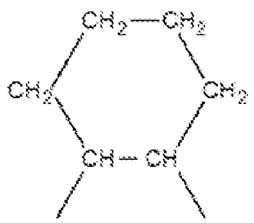

(I)

$-CH_2-CH(CH=CH_2)-$ (II)

La présence de motif cyclique saturé à 6 membres, 1,2-cyclohexanediyle, de formule (I) dans le copolymère peut résulter d'une série d'insertions très particulières de l'éthylène et du 1,3-butadiène dans la chaîne polymère au cours de sa croissance. Lorsque l'élastomère diénique fortement saturé comprend des unités de formule (I) ou des unités de formule (II), les pourcentages molaires des unités de formule (I) et des unités de formule (II) dans l'élastomère diénique fortement saturé, respectivement o et p, satisfont de préférence à l'équation suivante (eq. 1) ou à l'équation (eq. 2), o et p étant calculés sur la base de l'ensemble des unités monomères de l'élastomère diénique fortement saturé.

$$0 < o+p \leq 30 \quad \text{(eq. 1)}$$

$$0 < o+p < 25 \quad \text{(eq. 2)}$$

L'élastomère diénique fortement saturé peut être constitué d'un mélange d'élastomères diéniques fortement saturés qui se différencient les uns des autres par leurs microstructures ou par leurs macrostructures.

Le taux de l'élastomère diénique fortement saturé dans la composition de caoutchouc est d'au moins 50 parties en poids pour cent parties d'élastomère de la composition de caoutchouc (pce). De préférence, le taux de l'élastomère diénique fortement saturé dans la composition de caoutchouc varie dans un domaine allant de 80 à 100 pce. De manière plus préférentielle, il varie dans un domaine allant de 90 à 100 pce. Il est avantageusement de 100 pce.

La composition de caoutchouc comprend un noir de carbone à titre de charge renforçante. De préférence, le noir de carbone représente plus de 50%, préférentiellement plus de 90% en masse de la charge renforçante, en particulier 100% en masse de la charge renforçante. Comme noirs de carbone conviennent tous les noirs de carbone renforçants, notamment les noirs conventionnellement utilisés dans les pneumatiques ou leurs bandes de roulement (noirs dits de

grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Lorsque la composition de caoutchouc conforme à l'invention est utilisée dans une bande de roulement, le noir de carbone est préférentiellement un noir de carbone des séries 100 ou 200.

La charge renforçante peut comprendre tout type de charge autre que le noir de carbone qui est aussi connue pour ses capacités à renforcer une composition de caoutchouc utilisable pour la fabrication de pneumatiques, par exemple une charge inorganique renforçante telle que de la silice à laquelle est associé de manière connue un agent de couplage.

Le taux de noir de carbone dans la composition de caoutchouc peut varier dans une large mesure et est ajusté par l'homme du métier selon l'application envisagée de la composition de caoutchouc, en particulier dans le domaine du pneumatique. Le taux de noir de carbone dans la composition de caoutchouc est compris préférentiellement entre 25 pce et 65 pce, notamment pour une application de la composition de caoutchouc dans une bande de roulement, en particulier pour véhicules destinés à porter de lourdes de charges. Pour une telle application dans le domaine des véhicules poids lourds, la composition de caoutchouc peut présenter un niveau de renforcement insuffisant pour un taux inférieur ou égal à 25 pce et peut présenter une hystérèse excessive pour un taux supérieur ou égal à 65 pce.

Le système de vulcanisation utile aux besoins de l'invention a pour caractéristique essentielle de comprendre du soufre et un accélérateur de vulcanisation.

Le soufre est typiquement apporté sous forme de soufre moléculaire ou d'un agent donneur de soufre, de préférence sous forme moléculaire. Le soufre sous forme moléculaire est aussi désigné sous l'appellation de soufre moléculaire. On entend par donneur de soufre tout composé qui libère des atomes de soufre, combinés ou pas sous la forme d'une chaîne polysulfure, aptes à s'insérer dans les chaînes polysulfures formés au cours de la vulcanisation et pontant les chaînes élastomères. Le taux de soufre dans la composition de caoutchouc est préférentiellement inférieur à 1 pce, de préférence compris entre 0.3 et 1 pce.

Selon un mode de réalisation plus préférentiel de l'invention, le taux de soufre dans la composition de caoutchouc est inférieur à 0.95 pce, de préférence compris entre 0.3 pce et 0.95 pce.

Selon un mode de réalisation encore plus préférentiel de l'invention, le taux de soufre dans la composition de caoutchouc est inférieur à 0.8 pce, de préférence compris entre 0.3 pce et 0.8 pce.

L'accélérateur de vulcanisation est un mélange d'un accélérateur primaire et d'un accélérateur secondaire. La dénomination « un accélérateur primaire » désigne un seul accélérateur primaire ou un mélange d'accélérateurs primaires. De façon analogue, la dénomination « un accélérateur secondaire » désigne un seul accélérateur secondaire ou un mélange d'accélérateurs secondaires. Par définition, les taux d'accélérateur primaire et d'accélérateur secondaire dans le système de vulcanisation sont tous les deux strictement supérieurs à 0 pce.

L'accélérateur primaire est un sulfénamide. A titre d'exemples d'accélérateurs primaires utiles aux besoins de l'invention, on peut citer préférentiellement les benzothiazolesulfénamides, notamment le N-cyclohexyl-2-benzothiazyle sulfénamide ("CBS"), le N,N-dicyclohexyl-2-benzothiazyle sulfénamide ("DCBS"), le N-ter-butyl-2-benzothiazyle sulfénamide ("TBBS"), et les mélanges de ces composés. L'accélérateur primaire, en l'espèce le sulfénamide, est préférentiellement le N-cyclohexyl-2-benzothiazyle sulfénamide.

Selon une première variante, l'accélérateur secondaire est un polysulfure de thiurame. Selon une deuxième variante, l'accélérateur secondaire est un mélange d'un polysulfure de thiurame et d'une guanidine. On entend par une guanidine tout composé qui contient le radical divalent -HN-C(=NH)-NH-. La guanidine utile aux besoins de l'invention est de préférence la diphénylguanidine.

A titre de polysulfures de thiurame conviennent en particulier les disulfures de thiurame, plus particulièrement le disulfure de tétraéthylthiurame, le disulfure de tétrabutylthiurame ("TBTD"), le disulfure de tétrabenzylthiurame ("TBZTD") et les mélanges de ces composés. Le polysulfure de thiurame est préférentiellement un disulfure de thiurame, plus préférentiellement le disulfure de tétrabenzylthiurame.

Selon une variante préférentielle, l'accélérateur de vulcanisation est un mélange d'un sulfénamide et d'un disulfure de thiurame, plus préférentiellement un mélange de N-cyclohexyl-2-benzothiazyle sulfénamide et d'un disulfure de thiurame, encore plus préférentiellement un mélange de N-cyclohexyl-2-benzothiazyle sulfénamide et de disulfure de tétrabenzylthiurame.

Selon une autre variante préférentielle, l'accélérateur de vulcanisation est préférentiellement un mélange d'un sulfénamide, d'un disulfure de thiurame et de diphénylguanidine, plus préférentiellement un mélange de N-cyclohexyl-2-benzothiazyle sulfénamide, d'un disulfure de thiurame et de diphénylguanidine, encore plus préférentiellement un mélange de N-cyclohexyl-2-benzothiazyle sulfénamide, de disulfure de tétrabenzylthiurame et de diphénylguanidine.

De préférence, le ratio massique entre la quantité de l'accélérateur secondaire et la quantité totale d'accélérateurs est inférieur à 0.7, la quantité totale d'accélérateurs étant la somme de la quantité massique de l'accélérateur primaire et de la quantité massique de l'accélérateur secondaire dans la composition de caoutchouc. Autrement dit, le taux massique ou quantité massique de l'accélérateur secondaire représente moins de 70% en masse de la quantité totale d'accélérateurs. De préférence, le ratio massique entre la quantité de l'accélérateur secondaire et la quantité

totale d'accélérateurs est supérieur à 0.05, plus particulièrement compris entre 0.05 et 0.7.

Ces plages préférentielles relatives aux ratios massiques entre la quantité de l'accélérateur secondaire et la quantité totale d'accélérateurs permettent d'améliorer aussi le compromis entre les propriétés de cohésion et les temps de cuisson sous presse en diminuant très fortement la durée sous presse tout en maintenant de bonnes propriétés limite, même en la présence d'une amorce de fissure dans la composition de caoutchouc.

Selon un mode de réalisation préférentiel, le rapport massique entre le taux de soufre et la quantité totale d'accélérateurs dans la composition de caoutchouc est inférieur à 1, de préférence inférieur ou égal à 0.7, de manière plus préférentielle inférieur à 0.6. L'utilisation de tels rapports permettent d'obtenir des compositions avec des propriétés de cohésion davantage améliorées.

Selon un mode de réalisation particulièrement préférentiel de l'invention, le taux de soufre dans la composition de caoutchouc est inférieur à 1 pce et le rapport massique entre le taux de soufre et la quantité totale d'accélérateurs dans la composition de caoutchouc est inférieur à 1. Cette double condition portant sur le taux de soufre et sur le rapport massique entre le taux de soufre et la quantité totale d'accélérateurs permettent d'obtenir des compositions avec une cohésion encore plus forte. Les propriétés de cohésion sont d'autant plus améliorées que le taux de soufre et le rapport massique entre le taux de soufre et la quantité totale d'accélérateurs sont faibles et sont notamment dans les plages préférentielles mentionnées précédemment pour le taux de soufre et pour le rapport massique entre le taux de soufre et la quantité totale d'accélérateurs.

La composition de caoutchouc peut comporter également tout ou partie des additifs usuels habituellement utilisés dans les compositions de caoutchouc destinées à être utilisées dans un pneumatique, comme par exemple dans une bande de roulement pour pneumatique. De tels additifs sont par exemple des agents de mise en oeuvre, des plastifiants, des pigments, des agents de protection tels que cires anti-ozone, anti-ozonants chimiques, anti-oxydants, des activateurs de vulcanisation. Ces additifs sont généralement incorporés dans la composition de caoutchouc avant l'étape b) du procédé conforme à l'invention, par exemple au cours de l'étape a).

Après l'étape b) du procédé, la composition de caoutchouc peut être calandrée ou extrudée, de préférence pour former tout ou partie d'un profil d'une bande de roulement d'un pneumatique, notamment destiné à équiper un véhicule portant de lourdes charges comme par exemple les véhicules poids lourd, les véhicules de génie civil.

La composition de caoutchouc fabriquée selon le procédé conforme à l'invention est avantageusement vulcanisée, de préférence à une température supérieure à 110°C, notamment après avoir été extrudée ou calandrée sous la forme d'un article semi-fini comme une bande de roulement pour pneumatique.

En résumé, l'invention peut être mise en oeuvre selon l'un quelconque des modes de réalisation suivants 1 à 31 :

Mode 1 : Procédé de fabrication d'une composition de caoutchouc qui comprend un élastomère diénique fortement saturé, une charge renforçante comprenant un noir de carbone et un système de vulcanisation comprenant du soufre et un accélérateur de vulcanisation,

- l'élastomère diénique fortement saturé étant un copolymère d'éthylène et d'un 1,3-diène contenant des unités éthylène qui représentent au moins 50% en mole des unités monomères du copolymère,
- le taux de l'élastomère diénique fortement saturé dans la composition de caoutchouc étant supérieur à 50 pce,
- l'accélérateur de vulcanisation étant un mélange d'un accélérateur primaire et d'un accélérateur secondaire,

l'accélérateur primaire étant un sulfénamide, l'accélérateur secondaire étant un polysulfure de thiurame ou un mélange d'un polysulfure de thiurame et d'une guanidine,
lequel procédé comprend une étape a) suivie d'une étape b) :

a) le mélangeage de l'élastomère diénique fortement saturé, de la charge renforçante et de l'accélérateur secondaire par malaxage à une température supérieure à 110°C, en l'absence du soufre et de l'accélérateur primaire,
b) l'incorporation du soufre et de l'accélérateur primaire dans la composition de caoutchouc par malaxage à une température inférieure à 110°C.

Mode 2 : Procédé selon le mode 1 dans lequel l'étape a) est réalisée à une température comprise entre 110°C et 190°C.

Mode 3 : Procédé selon le mode 1 ou 2 dans lequel l'étape a) est réalisée à une température comprise entre 130°C et 180°C.

Mode 4 : Procédé selon l'un quelconque des modes 1 à 3 dans lequel l'étape b) se fait à une température comprise entre 40°C et 100°C.

Mode 5 : Procédé selon l'un quelconque des modes 1 à 4 dans lequel l'élastomère diénique fortement saturé comprend au moins 60% molaire d'unité éthylène.

Mode 6 : Procédé selon l'un quelconque des modes 1 à 5 dans lequel l'élastomère diénique fortement saturé comprend au moins 65% molaire d'unité éthylène.

Mode 7 : Procédé selon l'un quelconque des modes 1 à 6 dans lequel l'élastomère diénique fortement saturé comprend au moins 70% molaire d'unité éthylène.

Mode 8 : Procédé selon l'un quelconque des modes 1 à 7 dans lequel l'élastomère diénique fortement saturé comprend au plus 90% molaire d'unité éthylène.

Mode 9 : Procédé selon l'un quelconque des modes 1 à 8 dans lequel l'élastomère diénique fortement saturé comprend au plus 85% molaire d'unité éthylène.

Mode 10 : Procédé selon l'un quelconque des modes 1 à 9 dans lequel le 1,3-diène est le 1,3-butadiène ou un mélange de 1,3-diènes dont un est le 1,3-butadiène.

Mode 11 : Procédé selon l'un quelconque des modes 1 à 10 dans lequel l'élastomère diénique fortement saturé comprend des unités de formule (I) ou des unités de formule (II).

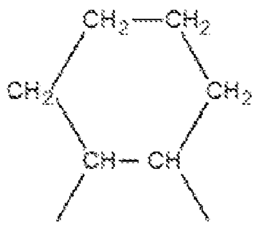

(I)

$-CH_2-CH(CH=CH_2)-$ (II)

Mode 12 : Procédé selon l'un quelconque des modes 1 à 11 dans lequel les pourcentages molaires des unités de formule (I) et des unités de formule (II) dans l'élastomère diénique fortement saturé, respectivement o et p, satisfont à l'équation suivante (eq. 1), ou à l'équation (eq. 2), o et p étant calculés sur la base de l'ensemble des unités monomères de l'élastomère diénique fortement saturé.

$$0 < o+p \leq 30 \quad \text{(eq. 1)}$$

$$0 < o+p < 25 \quad \text{(eq. 2)}$$

Mode 13 : Procédé selon l'un quelconque des modes 1 à 12 dans lequel le taux de l'élastomère diénique fortement saturé dans la composition de caoutchouc varie dans un domaine allant de 80 à 100 pce.

Mode 14 : Procédé selon l'un quelconque des modes 1 à 13 dans lequel le taux de l'élastomère diénique fortement saturé dans la composition de caoutchouc varie dans un domaine allant de 90 à 100 pce.

Mode 15 : Procédé selon l'un quelconque des modes 1 à 14 dans lequel le taux de l'élastomère diénique fortement saturé dans la composition de caoutchouc est de 100 pce.

Mode 16 : Procédé selon l'un quelconque des modes 1 à 15 dans lequel le noir de carbone représente plus de 50% en masse de la charge renforçante.

Mode 17 : Procédé selon l'un quelconque des modes 1 à 16 dans lequel le noir de carbone représente plus de 90% en masse de la charge renforçante.

Mode 18 : Procédé selon l'un quelconque des modes 1 à 17 dans lequel le taux de noir de carbone dans la composition de caoutchouc est compris entre 25 pce et 65 pce.

Mode 19 : Procédé selon l'un quelconque des modes 1 à 18 dans lequel le taux de soufre dans la composition de caoutchouc est inférieur à 1 pce, de préférence compris entre 0.3 et 1 pce.

Mode 20 : Procédé selon l'un quelconque des modes 1 à 19 dans lequel le taux de soufre dans la composition de caoutchouc est inférieur à 0.95 pce, de préférence compris entre 0.3 pce et 0.95 pce.

Mode 21 : Procédé selon l'un quelconque des modes 1 à 20 dans lequel le taux de soufre dans la composition de caoutchouc est inférieur à 0.8 pce, de préférence compris entre 0.3 pce et 0.8 pce.

Mode 22 : Procédé selon l'un quelconque des modes 1 à 21 dans lequel le sulfénamide est un benzothiazolesulfénamide.

Mode 23 : Procédé selon l'un quelconque des modes 1 à 22 dans lequel le sulfénamide est le N-cyclohexyl-2-benzothiazyle sulfénamide.

Mode 24 : Procédé selon l'un quelconque des modes 1 à 23 dans lequel la guanidine est la diphénylguanidine.

Mode 25 : Procédé selon l'un quelconque des modes 1 à 24 dans lequel le polysulfure de thiurame est un disulfure de thiurame.

Mode 26 : Procédé selon l'un quelconque des modes 1 à 25 dans lequel le polysulfure de thiurame est le disulfure de tétrabenzylthiurame.

Mode 27 : Procédé selon l'un quelconque des modes 1 à 26 dans lequel le ratio massique entre la quantité de l'accélérateur secondaire et la quantité totale d'accélérateurs est inférieur à 0.7, de préférence est compris entre 0.05 et 0.7, la quantité totale d'accélérateurs étant la somme de la quantité massique de l'accélérateur primaire et de la quantité massique de l'accélérateur secondaire dans la composition de caoutchouc.

Mode 28 : Procédé selon l'un quelconque des modes 1 à 27 dans lequel le rapport massique entre le taux de soufre et la quantité totale d'accélérateurs dans la composition de caoutchouc est inférieur à 1.

Mode 29 : Procédé selon l'un quelconque des modes 1 à 28 dans lequel le rapport massique entre le taux de soufre et la quantité totale d'accélérateurs dans la composition de caoutchouc est inférieur ou égal à 0.7, de manière préférentielle inférieur à 0.6.

Mode 30 : Procédé selon l'un quelconque des modes 1 à 29 dans lequel l'étape b) est suivie d'une étape de vulcanisation de la composition de caoutchouc.

Mode 31 : Procédé selon le mode 30 dans lequel l'étape de vulcanisation est réalisée à une température supérieure à 110°C.

Les caractéristiques précitées de la présente invention, ainsi que d'autres, seront mieux comprises à la lecture de la description suivante des exemples de réalisation de l'invention, donnés à titre illustratif et non limitatif.

**Exemples**

Tests et mesures :

Détermination de la microstructure des élastomères :

La microstructure des élastomères est déterminée par analyse RMN $^1H$, suppléée par l'analyse RMN $^{13}C$ lorsque la résolution des spectres RMN du $^1H$ ne permet pas l'attribution et la quantification de toutes les espèces. Les mesures sont réalisées à l'aide d'un spectromètre RMN BRUKER 500MHz à des fréquences de 500.43 MHz pour l'observation du proton et 125.83MHz pour l'observation du carbone.

Pour les élastomères non solubles mais ayant la capacité de gonfler dans un solvant, est utilisée une sonde

HRMAS 4mm z-grad permettant d'observer le proton et le carbone en mode découplé du proton. Les spectres sont acquis à des vitesses de rotation de 4000Hz à 5000Hz.

Pour les mesures sur des élastomères solubles, est utilisée une sonde RMN liquide permettant d'observer le proton et le carbone en mode découplé du proton.

La préparation des échantillons non solubles est faite dans des rotors remplis avec le matériau analysé et un solvant deutéré permettant le gonflement, en général du chloroforme deutéré (CDCl3). Le solvant utilisé doit toujours être deutéré et sa nature chimique peut être adaptée par l'homme du métier. Les quantités de matériau utilisées sont ajustées de façon à obtenir des spectres avec une sensibilité et une résolution suffisante. Les échantillons solubles sont mis en solution dans un solvant deutéré (environ 25mg d'élastomère dans 1mL), en général du chloroforme deutéré (CDCl3). Le solvant ou coupage de solvant utilisé doit toujours être deutéré et sa nature chimique peut être adaptée par l'homme du métier.

Dans les deux cas (échantillon soluble ou échantillon gonflé):
Pour la RMN du proton est utilisée une séquence simple impulsion de 30°. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative.

Pour la RMN du carbone est utilisée une séquence simple impulsion 30° avec un découplage du proton uniquement pendant l'acquisition pour éviter les effets « Overhauser Nucléaire » (NOE) et rester quantitatif. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative.

Les mesures de RMN sont réalisées à 25°C.

Viscosité Mooney :

La viscosité Mooney est mesurée à l'aide d'un consistomètre oscillant tel que décrit dans la norme ASTM D1646 (1999). La mesure se fait selon le principe suivant : l'échantillon analysé à l'état cru (i.e., avant cuisson) est moulé (mis en forme) dans une enceinte cylindrique chauffée à une température donnée (100°C). Après 1 minute de préchauffage, le rotor tourne au sein de l'éprouvette à 2 tours/minute et on mesure le couple utile pour entretenir ce mouvement après 4 minutes de rotation. La viscosité Mooney (ML) est exprimée en "unité Mooney" (UM, avec 1 UM=0,83 Newton.mètre).

Rhéométrie :

Les mesures sont effectuées à 150°C avec un rhéomètre à chambre oscillante, selon la norme DIN 53529 - partie 3 (juin 1983). L'évolution du couple rhéométrique en fonction du temps décrit l'évolution de la rigidification de la composition par suite de la réaction de vulcanisation. Les mesures sont traitées selon la norme DIN 53529 - partie 2 (mars 1983) : ti est le délai d'induction, c'est-à-dire le temps nécessaire au début de la réaction de vulcanisation ; ta (par exemple t90) est le temps nécessaire pour atteindre une conversion de a%, c'est-à-dire a% (par exemple 90%) de l'écart entre les couples minimum et maximum.

Fixation :

Les mesures sont effectuées à 130°C, conformément à la norme française NF T 43-005 (1991). L'évolution de l'indice consistométrique en fonction du temps permet de déterminer le temps de grillage des compositions de caoutchouc, apprécié conformément à la norme précitée par le paramètre T5 (cas d'un grand rotor), exprimé en minutes, et défini comme étant le temps nécessaire pour obtenir une augmentation de l'indice consistométrique (exprimée en UM) de 5 unités au-dessus de la valeur minimale mesurée pour cet indice.

Pertes :

On mesure les pertes hystérétiques, notées P60, en pourcentage de rebond au sixième rebond à 60°C conformément à la norme ISO R17667.

Propriétés dynamiques :

Les propriétés dynamiques et plus particulièrement l'hystérèse tanδ(max) sont mesurées sur un viscoanalyseur (Metravib VA4000), selon la norme ASTM D 5992-96. On enregistre la réponse d'un échantillon de composition vulcanisée

(éprouvette cylindrique de 4 mm d'épaisseur et de 400 $mm^2$ de section), soumis à une sollicitation sinusoïdale en cisaillement simple alterné, à la fréquence de 10Hz, dans les conditions contrôlées en température (60°C). On effectue un balayage en amplitude de déformation de 0,1% à 100% (cycle aller), puis de 100% à 1% (cycle retour). Le résultat exploité ici est le facteur de perte tan$\delta$. Pour le cycle aller, on indique la valeur maximale de tan$\delta$ observée, noté tan$\delta$(max).

Préparation des compositions de caoutchouc :

Deux compositions de caoutchouc C1 et C2 dont le détail de la formulation figure dans le tableau 1, ont été préparées selon le procédé conforme à l'invention pour C1, selon un procédé conventionnel et non conforme à l'invention pour C2.

Préparation de la composition C1 :

On introduit dans un mélangeur interne de volume : 3300 $cm^3$ (taux de remplissage final : environ 70% en volume), dont la température initiale de cuve est d'environ 50°C, successivement l'élastomère, la charge renforçante, les accélérateurs secondaires ainsi que les divers autres ingrédients à l'exception du soufre et de l'accélérateur primaire. On conduit alors un travail thermomécanique (phase non-productive) en une étape, qui dure au total environ 3 à 4 min, jusqu'à atteindre une température maximale de « tombée » de 160°C. On récupère le mélange ainsi obtenu, on le refroidit puis on incorpore le soufre et l'accélérateur primaire sur un mélangeur externe (mélangeur à cylindres) à 30°C, en mélangeant le tout (phase productive) pendant 10 minutes.

Préparation de la composition C2 :

On introduit dans un mélangeur interne de volume : 3300 $cm^3$ (taux de remplissage final : environ 70% en volume), dont la température initiale de cuve est d'environ 50°C, successivement l'élastomère, la charge renforçante ainsi que les divers autres ingrédients à l'exception du soufre, de l'accélérateur primaire et de l'accélérateur secondaire. On conduit alors un travail thermomécanique (phase non-productive) en une étape, qui dure au total environ 3 à 4 min, jusqu'à atteindre une température maximale de « tombée » de 160°C. On récupère le mélange ainsi obtenu, on le refroidit puis on incorpore le soufre, l'accélérateur primaire et l'accélérateur secondaire sur un mélangeur externe (mélangeur à cylindres) à 30°C, en mélangeant le tout (phase productive) pendant 10 minutes.

Les compositions C1 et C2 ainsi obtenues sont ensuite calandrées soit sous la forme de plaques (épaisseur 2 à 3mm) ou de feuilles fines de caoutchouc pour la mesure de leur propriétés physiques ou mécaniques, soit extrudées sous la forme d'une bande de roulement pour pneumatique, puis vulcanisées.

L'élastomère (EBR) est préparé selon le mode opératoire suivant :

Dans un réacteur de 70 L contenant du méthylcyclohexane (64 L), de l'éthylène (5600 g) et du 1,3-butadiène (2948 g), on ajoute du butyloctylmagnésium (BOMAG) en solution dans le méthylcyclohexane et le catalyseur préformé. Le ratio Mg/Nd est de 6.2. Le volume de catalyseur préformé introduit est de 840 mL, la concentration du catalyseur étant 0.0065 M. La température de réaction est régulée à une température de 80°C et la réaction de polymérisation démarre. La réaction de polymérisation se déroule à une pression constante de 8.3 bars. Le réacteur est alimenté tout au long de la polymérisation en éthylène et en 1,3-butadiène dans les proportions molaires 73/27. La réaction de polymérisation est stoppée par refroidissement, dégazage du réacteur et ajout d'éthanol. Un anti-oxydant est ajouté à la solution de polymère. Le copolymère est récupéré après un stripping à la vapeur d'eau et séchage jusqu'à masse constante. La durée de polymérisation est de 225 minutes. La masse pesée (6.206 kg) permet de déterminer l'activité catalytique moyenne du système catalytique exprimée en kilogramme de polymère synthétisé par mole de métal néodyme et par heure (kg/mol.h). Le copolymère possède une valeur de ML égale à 62.

Le système catalytique est un système catalytique préformé. Il est préparé dans le méthylcyclohexane à partir d'un métallocène, le $[Me_2Si(Flu)_2Nd(\mu\text{-}BH_4)_2Li(THF)]$ à 0.0065 mol/L, d'un co-catalyseur, le butyloctylmagnésium (BOMAG) dont le ratio molaire BOMAG/Nd est égal à 2.2, et d'un monomère de préformation, le 1,3-butadiène dont le ratio molaire 1,3-butadiène/Nd est égal à 90. Le milieu est chauffé à 80°C sur une durée de 5h. Il est préparé selon une méthode de préparation conforme au paragraphe II.1 de la demande de brevet WO 2017093654 A1.

Résultats :

Les résultats figurent dans le tableau 2. Les résultats sont exprimés en base 100 par rapport à un témoin ([valeur de la composition C1/valeur de la composition C2]x100). Une valeur supérieure à 100 indique une valeur supérieure à celle du témoin.

Les résultats montrent que la composition C1 présente des propriétés hystérétiques plus faibles que la composition C2. En effet les valeurs de pertes à 60°C et de tan$\delta$(max) sont plus faibles pour C1 que pour C2. Cette diminution

d'hystérèse est obtenue grâce à l'introduction des accélérateurs secondaires pendant la phase non productive et sans qu'il n'y ait d'impact significatif ni sur la cinétique de vulcanisation, ni sur la sécurité au grillage. Effectivement, pour ce qui est de la sécurité au grillage, le temps d'induction ti est de 3.5 minutes pour C1 contre 3.8 minutes pour C2. Quant à la cinétique de vulcanisation, les valeurs sont quasiment semblables.

Contre toute attente, l'introduction des accélérateurs secondaires au cours de la phase non productive permet de réduire l'hystérèse des compositions de caoutchouc vulcanisées, renforcées d'un noir de carbone et contenant un élastomère qui contient des unités d'un diène conjugué et qui est aussi riche en unités éthylène.

Tableau 1

| **Composition** | C1 | C2 |
|---|---|---|
| EBR (1) | 100 | 100 |
| Noir de carbone (2) | 40 | 40 |
| Antioxydant (3) | 2 | 2 |
| Cire anti-ozone | 1 | 1 |
| Acide stéarique (4) | 1.5 | 1.5 |
| ZnO (5) | 2.5 | 2.5 |
| Accélérateur primaire (6) | 0.5 | 0.5 |
| Accélérateur secondaire (7) | 0.8 | 0.8 |
| Soufre | 0.4 | 0.4 |

(1) Copolymère contenant 75% en mole d'unités éthylène, 7% en mole d'unité 1,2-cyclohexanediyle, 12% en mole de motif 1,2 de la partie butadiénique, 6% en mole de motif 1,4 de la partie butadiénique
(2) N234
(3) N-(1,3-diméthylbutyl)-N'-phényl-p-phenylènediamine ("Santoflex 6-PPD" société Flexsys)
(4) Stéarine « Pristerene 4931 » de la société Uniqema
(5) Oxyde de zinc de grade industriel de la société Umicore
(6) N-cyclohexyl-2-benzothiazyle sulfénamide « Santocure CBS » de la société Flexys
(7) Disulfure de tétrabenzylthiurame (0.3 pce, « Perkacit TBZTD » de la société Flexsys) et diphénylguanidine (0.5 pce, « Perkacit DPG » de la société Flexsys)

Tableau 2

| **Composition** | C1 | C2 |
|---|---|---|
| ti à 150°C | 92 | 100 |
| t90 à 150°C | 102 | 100 |
| Fixation à 130°C | 103 | 100 |
| P60 | 94 | 100 |
| $\tan\delta$(max) | 92 | 100 |

**Revendications**

1. Procédé de fabrication d'une composition de caoutchouc qui comprend un élastomère diénique fortement saturé, une charge renforçante comprenant un noir de carbone et un système de vulcanisation comprenant du soufre et un accélérateur de vulcanisation,

   - l'élastomère diénique fortement saturé étant un copolymère d'éthylène et d'un 1,3-diène contenant des unités éthylène qui représentent au moins 50% en mole des unités monomères du copolymère,
   - le taux de l'élastomère diénique fortement saturé dans la composition de caoutchouc étant supérieur à 50 pce,
   - l'accélérateur de vulcanisation étant un mélange d'un accélérateur primaire et d'un accélérateur secondaire,

l'accélérateur primaire étant un sulfénamide, l'accélérateur secondaire étant un polysulfure de thiurame ou un mélange d'un polysulfure de thiurame et d'une guanidine,
lequel procédé comprend une étape a) suivie d'une étape b) :

a) le mélangeage de l'élastomère diénique fortement saturé, de la charge renforçante et de l'accélérateur secondaire par malaxage à une température supérieure à 110°C, en l'absence du soufre et de l'accélérateur primaire,
b) l'incorporation du soufre et de l'accélérateur primaire dans la composition de caoutchouc par malaxage à une température inférieure à 110°C.

**2.** Procédé selon la revendication 1 dans lequel l'étape a) est réalisée à une température comprise entre 110°C et 190°C.

**3.** Procédé selon la revendication 1 ou 2 dans lequel l'étape a) est réalisée à une température comprise entre 130°C et 180°C.

**4.** Procédé selon l'une quelconque des revendications 1 à 3 dans lequel l'étape b) se fait à une température comprise entre 40°C et 100°C.

**5.** Procédé selon l'une quelconque des revendications 1 à 4 dans lequel le polysulfure de thiurame est un disulfure de thiurame, préférentiellement le disulfure de tétrabenzylthiurame.

**6.** Procédé selon l'une quelconque des revendications 1 à 5 dans lequel la guanidine est la diphénylguanidine.

**7.** Procédé selon l'une quelconque des revendications 1 à 6 dans lequel le sulfénamide est un benzothiazolesulfénamide, préférentiellement le N-cyclohexyl-2-benzothiazyle sulfénamide.

**8.** Procédé selon l'une quelconque des revendications 1 à 7 dans lequel le noir de carbone représente plus de 50% en masse de la charge renforçante.

**9.** Procédé selon l'une quelconque des revendications 1 à 8 dans lequel le noir de carbone représente plus de 90% en masse de la charge renforçante.

**10.** Procédé selon l'une quelconque des revendications 1 à 9 dans lequel le taux de noir de carbone dans la composition de caoutchouc est compris entre 25 pce et 65 pce.

**11.** Procédé selon l'une quelconque des revendications 1 à 10 dans lequel le taux de l'élastomère diénique fortement saturé dans la composition de caoutchouc varie dans un domaine allant de 80 à 100 pce, de préférence de 90 à 100 pce.

**12.** Procédé selon l'une quelconque des revendications 1 à 11 dans lequel le 1,3-diène est le 1,3-butadiène ou un mélange de 1,3-diènes dont un est le 1,3-butadiène.

**13.** Procédé selon l'une quelconque des revendications 1 à 12 dans lequel l'élastomère diénique fortement saturé comprend au moins 60% molaire d'unité éthylène, particulièrement au moins 65% molaire d'unité éthylène, plus particulièrement au moins 70% molaire d'unité éthylène.

**14.** Procédé selon l'une quelconque des revendications 1 à 13 dans lequel l'élastomère diénique fortement saturé comprend au plus 90% molaire d'unité éthylène, de préférence au plus 85% molaire d'unité éthylène.

**15.** Procédé selon l'une quelconque des revendications 1 à 14 dans lequel l'étape b) est suivie d'une étape de vulcanisation de la composition de caoutchouc, de préférence à une température supérieure à 110°C.

**Patentansprüche**

**1.** Verfahren zur Herstellung einer Kautschukzusammensetzung, die ein hochgesättigtes Dienelastomer, einen verstärkenden Füllstoff, der einen Ruß umfasst, und ein Vulkanisationssystem, das Schwefel und einen Vulkanisationsbeschleuniger umfasst, umfasst,

- wobei es sich bei dem hochgesättigten Dienelastomer um ein Copolymer von Ethylen und einem 1,3-Dien handelt, das Ethyleneinheiten enthält, die mindestens 50 Mol-% der Monomereinheiten des Copolymers ausmachen,
- wobei der Gehalt an hochgesättigtem Dienelastomer in der Kautschukzusammensetzung mehr als 50 phe beträgt,
- wobei es sich bei dem Vulkanisationsbeschleuniger um eine Mischung eines primären Beschleunigers und eines sekundären Beschleunigers handelt,

wobei es sich bei dem primären Beschleuniger um ein Sulfenamid handelt, wobei es sich bei dem sekundären Beschleuniger um ein Thiurampolysulfid oder eine Mischung eines Thiurampolysulfids und eines Guanidins handelt,
wobei das Verfahren einen Schritt a) gefolgt von einem Schritt b) umfasst:

a) Mischen des hochgesättigten Dienelastomers, des verstärkenden Füllstoffs und des sekundären Beschleunigers durch Kneten bei einer Temperatur von mehr als 110 °C in Abwesenheit des Schwefels und des primären Beschleunigers,
b) Einarbeiten des Schwefels und des primären Beschleunigers in die Kautschukzusammensetzung durch Kneten bei einer Temperatur von weniger als 110 °C.

**2.** Verfahren nach Anspruch 1, wobei der Schritt a) bei einer Temperatur zwischen 110 °C und 190 °C durchgeführt wird.

**3.** Verfahren nach Anspruch 1 oder 2, wobei der Schritt a) bei einer Temperatur zwischen 130 °C und 180 °C durchgeführt wird.

**4.** Verfahren nach einem der Ansprüche 1 bis 3, wobei der Schritt b) bei einer Temperatur zwischen 40 °C und 100 °C erfolgt.

**5.** Verfahren nach einem der Ansprüche 1 bis 4, wobei es sich bei dem Thiurampolysulfid um ein Thiuramdisulfid, vorzugsweise Tetrabenzylthiuramdisulfid, handelt.

**6.** Verfahren nach einem der Ansprüche 1 bis 5, wobei es sich bei dem Guanidin um Diphenylguanidin handelt.

**7.** Verfahren nach einem der Ansprüche 1 bis 6, wobei es sich bei dem Sulfenamid um ein Benzothiazolsulfenamid, vorzugsweise N-Cyclohexyl-2-benzothiazylsulfenamid, handelt.

**8.** Verfahren nach einem der Ansprüche 1 bis 7, wobei der Ruß mehr als 50 Massen-% des verstärkenden Füllstoffs ausmacht.

**9.** Verfahren nach einem der Ansprüche 1 bis 8, wobei der Ruß mehr als 90 Massen-% des verstärkenden Füllstoffs ausmacht.

**10.** Verfahren nach einem der Ansprüche 1 bis 9, wobei der Gehalt an Ruß in der Kautschukzusammensetzung zwischen 25 phe und 65 phe liegt.

**11.** Verfahren nach einem der Ansprüche 1 bis 10, wobei der Gehalt an hochgesättigtem Dienelastomer in der Kautschukzusammensetzung in einem Bereich von 80 bis 100 phe und vorzugsweise von 90 bis 100 phe variiert.

**12.** Verfahren nach einem der Ansprüche 1 bis 11, wobei es sich bei dem 1,3-Dien um 1,3-Butadien oder eine Mischung von 1,3-Dienen, von denen eines 1,3-Butadien ist, handelt.

**13.** Verfahren nach einem der Ansprüche 1 bis 12, wobei das hochgesättigte Dienelastomer mindestens 60 Mol-% Ethyleneinheiten, insbesondere mindestens 65 Mol-% Ethyleneinheiten, spezieller mindestens 70 Mol-% Ethyleneinheiten, umfasst.

**14.** Verfahren nach einem der Ansprüche 1 bis 13, wobei das hochgesättigte Dienelastomer höchstens 90 Mol-% Ethyleneinheiten, vorzugsweise höchstens 85 Mol-% Ethyleneinheiten, umfasst.

**15.** Verfahren nach einem der Ansprüche 1 bis 14, wobei sich an den Schritt b) ein Schritt der Vulkanisation der Kautschukzusammensetzung, vorzugsweise bei einer Temperatur von mehr als 110 °C, anschließt.

## Claims

1. Method for producing a rubber composition which comprises a highly saturated diene elastomer, a reinforcing filler comprising a carbon black and a vulcanizing system comprising sulfur and a vulcanization accelerator,

    - the highly saturated diene elastomer being a copolymer of ethylene and of a 1,3-diene containing ethylene units which represent at least 50 mol% of the monomer units of the copolymer,
    - the content of the highly saturated diene elastomer in the rubber composition being greater than 50 phr,
    - the vulcanization accelerator being a mixture of a primary accelerator and of a secondary accelerator, the primary accelerator being a sulfenamide, the secondary accelerator being a thiuram polysulfide or a mixture of a thiuram polysulfide and a guanidine,

    which process comprises a step a) followed by a step b):

        a) mixing the highly saturated diene elastomer, the reinforcing filler and the secondary accelerator by kneading at a temperature above 110°C, in the absence of the sulfur and the primary accelerator,
        b) incorporating the sulfur and the primary accelerator into the rubber composition by kneading at a temperature below 110°C.

2. Process according to Claim 1, in which step a) is carried out at a temperature between 110°C and 190°C.

3. Process according to Claim 1 or 2, in which step a) is carried out at a temperature between 130°C and 180°C.

4. Process according to any one of Claims 1 to 3, in which step b) is carried out at a temperature between 40°C and 100°C.

5. Process according to any one of Claims 1 to 4, in which the thiuram polysulfide is a thiuram disulfide, preferentially tetrabenzylthiuram disulfide.

6. Process according to any one of Claims 1 to 5, in which the guanidine is diphenylguanidine.

7. Process according to any one of Claims 1 to 6, in which the sulfenamide is a benzothiazolesulfenamide, preferentially N-cyclohexyl-2-benzothiazylsulfenamide.

8. Process according to any one of Claims 1 to 7, in which the carbon black represents more than 50% by weight of the reinforcing filler.

9. Process according to any one of Claims 1 to 8, in which the carbon black represents more than 90% by weight of the reinforcing filler.

10. Process according to any one of Claims 1 to 9, in which the content of carbon black in the rubber composition is between 25 phr and 65 phr.

11. Process according to any one of Claims 1 to 10, in which the content of highly saturated diene elastomer in the rubber composition varies within a range extending from 80 to 100 phr, preferably from 90 to 100 phr.

12. Process according to any one of Claims 1 to 11, in which the 1,3-diene is 1,3-butadiene or a mixture of 1,3-dienes, one of which is 1,3-butadiene.

13. Process according to any one of Claims 1 to 12, in which the highly saturated diene elastomer comprises at least 60 mol% of ethylene units, particularly at least 65 mol% of ethylene units, more particularly at least 70 mol% of ethylene units.

14. Process according to any one of Claims 1 to 13, in which the highly saturated diene elastomer comprises at most 90 mol% of ethylene units, preferably at most 85 mol% of ethylene units.

15. Process according to any one of Claims 1 to 14, in which step b) is followed by a step of vulcanizing the rubber composition, preferably at a temperature above 110°C.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2007054223 A
- WO 2014114607 A
- EP 1092731 A
- WO 2004035639 A
- WO 2007054224 A
- WO 2017093654 A1
- WO 2018020122 A1
- WO 2018020123 A1